# EUROPEAN PATENT SPECIFICATION

(11) **EP 2 296 858 B1**
(45) Date of publication and mention of the grant of the patent: **03.07.2013**
(21) Application number: 09750253.8
(22) Date of filing: 21.05.2009
(51) Int. Cl.: B29B 17/02, D21B 1/02

(54) **METHOD FOR RECYCLING COMPOSITE MATERIAL**
VERFAHREN ZUM RECYCLING VON VERBUNDMATERIAL
PROCÉDÉ DE RECYCLAGE DE MATÉRIAU COMPOSITE

(30) Priority: 21.05.2008 EP 08425361
(43) Date of publication of application: 23.03.2011
(73) Proprietor: REPLAN GLOBAL SAGL, 6900 Lugano (IT)
(72) Inventor: LECCE, Roberto, I-10132 Torino (IT); CERUTTI, Silvano, I-10147 Salassa (Torino) (IT)
(74) Representative: Zardi, Marco
(86) International application number: PCT/IB2009/052131
(87) International publication number: WO 2009/141796

(56) References cited:
- EP-A- 0 493 720
- EP-A- 0 570 757
- US-A- 4 760 717
- US-A- 5 246 116

## Description

The present invention relates to a method for recycling composite material formed from cellulose, plastic material and aluminium, in particular the multilayer laminate commonly known by the brand name Tetrapak.

According to the prior art, Tetrapak (registered trademark) containers are subjected in a paper mill to a pulping process which allows 65-70% of the cellulose originally present to be recovered.

On the other hand, the residual portion of the composite material, moistened by the pulping treatment, is landfilled or incinerated.

Document EP 0 570 757 discloses a method for separating paper fiber and plastics from mixed waste materials in order to obtain substantially pure plastic.

Document US 4 760 717 discloses a washing process for separating plastic film from paper or cellulose fibers or other pollutants.

The object of the present invention is to provide a method for recycling said residual portion which allows it to be converted into a "secondary" raw material.

According to the invention, said object is achieved thanks to a method comprising the phases of:
- introducing the material into a tank full of water to allow settling of heavy foreign bodies and separation of the residual solid fraction,
- centrifuging the residual solid fraction, so as to reduce its moisture content,
- shredding and drying said solid fraction, so as to obtain a dried material having a water content of less than 2% and a cellulose content of less than 2%,
- compacting the dried material, and
- extruding the compacted material and subdividing it into granules.

The final granulated material behaves in substantially the same way as a filled plastic material and may accordingly be processed using the methods conventional in this sector, such as for example injection moulding, to obtain desired articles.

Preferably, the final granules contain from 45 to 95 w/w % plastic material and from 5 to 55 w/w % aluminium.

Such articles include, for example, pens, spectacle frames, miscellaneous stationery articles, insulating panels, motor vehicle components, grilles for household electrical appliances, etc.

The composite material treated in the method of the invention typically comprises from 20 to 30% cellulose, from 10 to 20% plastic material, from 10 to 20% aluminium and from 30 to 45% water.

Said percentages should be understood as percentages by weight. Advantageously, the composite material is subjected to a disagglomeration treatment before being introduced into the tank full of water, so as to enable more efficient separation of the foreign bodies enclosed therein.

In preferred embodiments of the method of the invention, the shredding phase makes it possible to obtain a material in the form of flattened particles having a mean area of between 80 and 140 mm², the centrifugation phase is carried out at a speed of between 1200 and 2600 rpm, and/or the compaction phase is carried out so as to obtain a material in briquette form.

Depending on the articles which it is intended to produce with the final granulated material, the extrusion phase may be carried out with various types of extruders.

When said articles must have specific properties, the extrusion phase is carried out in a planetary extruder, once appropriate additives well known in the art have been added to the material to be extruded.

For example, the material to be extruded has,added to it,fluidising agents in a quantity of between 5 and 10 parts per 100 parts of material to be extruded, and/or agents capable of imparting consistency in a quantity of between 10 and 20 parts per 100 parts of material to be extruded.

Alternatively, when the physical properties of the granular material do not have to meet particular requirements, the extrusion phase may be carried out in a twin screw extruder without the addition of particular additives.

A stream of dried material may optionally be divided into two or more sub-streams, each of which is supplied to a specific extruder which has been appropriately selected on the basis of the type of final articles to be produced. Further advantages and features of the present invention will become clear from the following example of embodiment which is provided by way of non-limiting example.

A composite material obtained by a pulping process carried out in a paper mill has the following percentage by weight composition:
- water 40%
- cellulose 30%
- polyethylene 15%
- aluminium 15%.

The composite material is first disagglomerated by subjecting it to a carding treatment and is then introduced into a tank full of water to allow settling of any heavy foreign bodies and separation of the residual solid fraction which has been softened having absorbed water.

Said residual solid fraction is conveyed onwards by means of a comb and a conveyor belt to a centrifuge operating at approx. 1700 rpm and having, on its external surface, holes of a diameter of approx. 2-3 mm so as to allow the majority of the water and the cellulose to escape.

The remaining material is then shredded and exposed to a stream of hot air, so as to allow a dried material having the following percentage by weight composition to be obtained:
- polyethylene 49%
- aluminium 49%
- water 1%
- cellulose 1%.

The dried material is then conveyed by means of a cyclone to a compactor, which shapes it into briquettes.

After an optional storage phase, the briquettes are then introduced into a planetary extruder once conventional processing additives have been added. The extruded product is then subdivided into granules which are finally bagged for dispatch to the place of use.

Naturally, the principle of the invention remaining the same, the details of construction and forms of embodiment may be varied widely with respect to those described, which have been given purely by way of example, without thereby departing from the scope of the invention as defined in the attached claims.

In particular, it has to be noticed that - differently from known recycling methods - the one of the present invention does not require the separation of aluminium from the plastic material.

## Claims

1. A method for recycling a composite material comprising cellulose, plastic material, aluminium and water obtained from a pulping process, so as to obtain a raw material suited to be used in a plastic forming process and behaving in substantially the same way as a filled plastic material, said method comprising the phases of:
- introducing said composite material into a tank full of water to allow settling of heavy foreign bodies and separation of the residual solid fraction;
- centrifuging said residual solid fraction, so as to reduce its moisture content;
- shredding and drying said solid fraction, so as to obtain a dried material having a water content of less than 2% and a cellulose content of less than 2%;
- compacting the dried material, and
- extruding the compacted material and subdividing it into granules.

2. A method according to claim 1), in which said shredding makes it possible to obtain a material in the form of flattened particles having a mean area of between 80 and 140 mm².

3. A method according to any one of the preceding claims, in which said centrifugation is carried out at a speed of between 1200 and 2600 rpm.

4. A method according to any one of the preceding claims, in which said compaction is carried out in such a manner as to obtain a material in briquette form.

5. A method according to any one of the preceding claims, in which said extrusion is carried out in a planetary extruder.

6. A method according to claim 5), in which the material to be extruded has,added to it,fluidising agents in a quantity of between 5 and 10 parts per 100 parts of material to be extruded, and/or agents capable of imparting consistency in a quantity of between 10 and 20 parts per 100 parts of material to be extruded.

7. A method according to any one of the preceding claims 1) to 4), in which said extrusion is carried out in a twin screw extruder.

8. A method according to any one of the preceding claims, in which said composite material obtained by a pulping process comprises from 20 to 30% cellulose, from 10 to 20% plastic material, from 10 to 20% aluminium and from 30 to 45% water.

9. A method according to any one of the preceding claims, in which said plastic material is polyethylene.

10. A method according to any one of the preceding claims, in which said composite material is subjected to a disagglomeration treatment before being introduced into the settling tank.

11. A method according to any one of the preceding claims, in which said granules contain from 45 to 95 w/w % ptastic material and from 5 to 55 w/w % aluminium.

## Patentansprüche

1. Eine Methode für das Recycling von Zellulose, Kunststoff, Aluminium und Wasser enthaltendem Verbundstoff, der aus einem Zerfaserungsprozess gewonnen wird, so dass ein Rohstoff gewonnen wird, der in einem Kunststoff-Formungsprozess verwendet werden kann und sich im Wesentlichen in gleicher Weise verhält wie ein angereichertes Kunststoffmaterial, wobei die besagte Methode folgende Phasen enthält:
- Einfüllen des besagten Verbundstoffs in einen mit Wasser gefüllten Behälter, um das Setzen schwerer Fremdkörper und die Abscheidung der verbleibenden, festen Fraktion zu ermöglichen,
- 5chleudern der verbleibenden, festen Fraktion, um ihren Feuchtigkeitsgehalt zu reduzieren;
- Schreddern und Trocknen der besagten festen Fraktion, um ein getrocknetes Material mit weniger als 2% Wassergehalt und weniger als 2% Zellulosegehalt zu erhalten;
- Kompaktierung des getrockneten Materials, und
- Strangpressen des kompaktierten Materials und seine Unterteilung in Körnchen.

2. Eine Methode gemäß Patentanspruch 1), in welcher das besagte Schreddern die Erzielung eines Materials in Form abgeflachter Partikel mit einer durchschnittlichen Fläche von 80 bis 140 mm² ermöglicht.

3. Eine Methode gemäß eines jeden der vorstehenden Patentansprüche, in welcher das besagte Schleudern mit einer Drehzahl von 1200 bis 2600 U/Min. ausgeführt wird.

4. Eine Methode gemäß eines jeden der vorstehenden Patentansprüche, in welcher die besagte Kompaktierung so ausgeführt wird, dass ein brikettförmiges Material erzielt wird.

5. Eine Methode gemäß eines jeden der vorstehenden Patentansprüche, in welcher das besagte Strangpressen in einem Planeten-Extruder ausgeführt wird.

6. Eine Methode gemäß Patentanspruch 5), in welcher das Strangpressgut in einem Verhältnis von 5 bis 10 Teilen auf 100 Teile Strangpressgut mit verflüssigenden Wirkstoffen und/oder in einem Verhältnis von 10 bis 20 Teilen pro 100 Teile Strangpressgut mit Konsistenz verleihenden Wirkstoffen versetzt ist.

7. Eine Methode gemäß eines jeden der vorstehenden Patentansprüche von 1) bis 4), in welcher das besagte Strangpressen in einem Doppelschneckenextruder ausgeführt wird.

8. Eine Methode gemäß eines jeden der vorstehenden Patentansprüche, in welcher der besagte, durch einen Zerfaserungsprozess gewonnene Verbundstoff 20 bis 30% Zellulose, 10 bis 20% Kunststoff, 10 bis 20% Aluminium und 30 bis 45% Wasser enthält.

9. Eine Methode gemäß eines jeden der vorstehenden Patentansprüche, in welcher der besagte Kunststoff Polyethylen ist.

10. Eine Methode gemäß eines jeden der vorstehenden Patentansprüche, in welcher der besagte Verbundstoff einer Desagglomerationsbehandlung unterzogen wird, bevor er in den Absetzliehälter gefüllt wird.

11. Eine Methode gemäß eines jeden der vorstehenden Patentansprüche, in welcher die besagten Körnchen 45 bis 95% Gewichtsanteil Kunststoff und 5 bis 55% Gewichtsanteil Aluminium enthalten.

## Revendications

1. Une méthode pour recycler un matériau composite comprenant cellulose, matériau plastique, aluminium et eau obtenu d'un procédé d'écrabouillage, de manière à obtenir une matière première indiquée pour être utilisée dans un procédé de formage de plastique et se comportant essentiellement de la même façon que le matériau plastique chargé, ladite méthode comprenant les phases suivantes:
- introduction dudit matériau composite dans un bac plein d'eau pour permettre la décantation de corps étrangers lourds et la séparation de la fraction solide résiduelle;
- centrifugation de ladite fraction solide résiduelle, de manière à réduire son taux d'humidité;
- trituration et séchage de ladite fraction solide, de manière à obtenir un matériau desséché ayant un taux d'eau inférieur à 2% et un taux de cellulose inférieur à 2%;
- compactage du matériau desséché, et
- extrusion du matériau compacté et sa réduction en grains.

2. Une méthode selon la revendication 1), où ladite trituration permet d'obtenir un matériau en forme de particules aplaties ayant une superficie moyenne comprise entre 80 et 140 mm².

3. Une méthode selon l'une quelconque des revendications précédentes, où ladite centrifugation est réalisée à une vitesse comprise entre 1200 et 2600 trlmin.

4. Une méthode selon l'une quelconque des revendications précédentes, où ledit compactage est réalisé de manière à obtenir un matériau en forme de briquettes.

5. Une méthode selon l'une quelconque des revendications précédentes, où ladite extrusion est réalisée dans une extrudeuse à planétaires.

6. Une méthode selon la revendication 5), où au matériau à extruder on ajoute d'agents fluidifiants dans une quantité comprise entre 5 et 10 parties par 100 parties de matériau à extruder, et/ou d'agents aptes à donner une consistance dans une quantité comprise entre 10 et 20 parties par 100 parties de matériau à extruder.

7. Une méthode selon l'une quelconque des revendications précédentes de 1) à 4), où ladite extrusion est réalisé dans une extrudeuse à deux vis.

8. Une méthode selon l'une quelconque des revendications précédentes, où ledit matériau composite obtenu par un procédé d'écrabouillage comprend de 20 à 30% de cellulose, de 10 à 20% de matériau plastique, de 10 à 20% d'aluminium et de 30 à 45% d'eau.

9. Une méthode selon l'une quelconque des revendications précédentes, où ledit matériau plastique est polyéthylène.

10. Une méthode selon l'une quelconque des revendications précédentes, où ledit matériau composite est soumis à un traitement de désagglomération avant d'être introduit dans le bac de décantation.

11. Une méthode selon l'une quelconque des revendications précédentes, où lesdits grains contiennent de 45 à 95% en poids de matériau plastique et de 5 à 55% en poids d'aluminium.
